# EUROPÄISCHE PATENTSCHRIFT

(11) **EP 3 135 537 B1**
(45) Veröffentlichungstag und Bekanntmachung des Hinweises auf die Patenterteilung: **23.02.2022**
(21) Anmeldenummer: 16183830.5
(22) Anmeldetag: 11.08.2016
(51) Int. Cl.: B60Q 1/50, B60Q 1/52, F21S 43/13

(54) **VERFAHREN ZUM BETRIEB EINER IN EINEM KRAFTFAHRZEUG ANGEORDNETEN LASERHECKLEUCHTE, LASERHECKLEUCHTE UND KRAFTFAHRZEUG**
METHOD FOR OPERATING A REAR LASER LAMP INSTALLED IN A MOTOR VEHICLE, REAR LASER LAMP AND MOTOR VEHICLE
PROCEDE DE FONCTIONNEMENT D'UN FEU ARRIERE LASER MONTE DANS UN VEHICULE AUTOMOBILE, FEU ARRIERE LASER ET VEHICULE AUTOMOBILE

(30) Priorität: 25.08.2015 DE 102015011231
(43) Veröffentlichungstag der Anmeldung: 01.03.2017
(73) Patentinhaber: AUDI AG, 85045 Ingolstadt (DE)
(72) Erfinder: Gut, Carsten, 88662 Überlingen (DE)

(56) Entgegenhaltungen:
- EP-A1- 1 748 309
- EP-A1- 2 896 937
- WO-A1-2014/162683
- WO-A1-2015/088562
- DE-A1- 4 402 661
- FR-A1- 2 967 625
- JP-A- 2000 284 220
- KR-A- 20130 084 173
- US-A1- 2008 175 012
- US-A1- 2010 302 072

## Beschreibung

Die Erfindung betrifft ein Verfahren zum Betrieb einer in einem Kraftfahrzeug angeordneten Laserheckleuchte, welche eine ein Lasermuster auf einem vom Kraftfahrzeug befahrenen Untergrund erzeugende Lichtverteilung abstrahlt.

Eine Einrichtung zum Signalgeben eines Fahrzeugs ist aus DE 44 02 661 A1 bekannt. Bei dieser Einrichtung wird ein Laserlicht derart emittiert, dass der Auftreffpunkt auf der Fahrbahn einen Sicherheitsabstand für nachfolgende Fahrzeuge kennzeichnet. Zu diesem Zweck ist die Laserlichtquelle zur Einstellung des Winkels des Laserstrahls schwenkbar. Zudem ist vorgesehen, dass Straßenkurven berücksichtigt werden.

EP 2 896 937 A1 offenbart ein Fahrbahnprojektionssystem eines Fahrzeugs, bei dem Informationen situationsabhängig und mittels eines Projektors in das Fahrzeugumfeld projiziert werden. Beispielsweise kann vorgesehen sein, dass ein bezüglich seiner Form an den Fahrbahnverlauf angepasster Richtungspfeil in Abhängigkeit von mittels einer Kamera erfassten Daten angezeigt wird.

Aus KR 2013 0084173 A ist ein System für ein Kraftfahrzeug bekannt, mittels dem in einer Unfallsituation ein ein Warndreieck darstellendes Laserbild hinter dem Kraftfahrzeug auf die Straße projiziert wird, wobei eine kurvenbedingte Fahrbahnkrümmung berücksichtigt wird. Hierzu werden Positionsinformationen des Kraftfahrzeugs mittels GPS ermittelt, wobei in Abhängigkeit hiervon eine Abstrahlrichtung ermittelt wird. Zur Einstellung des Abstrahlwinkels ist eine Antriebseinheit vorgesehen, mittels der eine Links-Rechts-Bewegung der Laserquelle ermöglicht wird.

Es ist bekannt, auf Basis von Lasern Heckleuchten zu realisieren, die beispielsweise als Schlusslicht oder Nebelschlussleuchten eingesetzt werden.

Dazu weist die Laserheckleuchte typischer Weise eine laserlichtemittierende Laserquelle auf, der eine Optikeinheit nachgeschaltet ist, wodurch sich eine von der Laserheckleuchte abgestrahlte Lichtverteilung ergibt. Diese ist zumeist fächerförmig und erzeugt ein Lasermuster auf einem vom Kraftfahrzeug befahrenen Untergrund. Daneben kann die Lichtverteilung in Abhängigkeit der Reflexionsverhältnisse des von ihr durchlaufenen Raums oberhalb des befahrenen Untergrunds bereits Reflexion erzeugen, sodass die Lichtverteilung bereits vor ihrem Auftreffen auf den Untergrund sichtbar ist. Laserheckleuchten ermöglichen dabei wesentlich höhere Leuchtdichten als andere Heckleuchten. Aufgrund einer durch den Laser realisierbaren besonders kleinen Etendue lassen sich Laserheckleuchten zudem besonders kleinbauend realisieren.

Derartige Laserheckleuchten weisen allerdings den Nachteil auf, dass das Lasermuster in vielen Fahrsituationen nicht an einer zweckmäßigen Position erzeugt wird, beispielsweise um dem nachfolgenden Verkehr vor einer Unterschreitung des Sicherheitsabstands zum Kraftfahrzeug zu warnen.

Der Erfindung liegt daher die Aufgabe zugrunde, eine Möglichkeit zum flexiblen Betrieb einer Laserleuchte anzugeben.

Zur Lösung dieser Aufgabe ist erfindungsgemäß ein Verfahren gemäß dem Anspruch 1 vorgesehen.

Die Erfindung beruht auf der Erkenntnis, dass durch die aktuelle Fahrsituation des Kraftfahrzeugs Änderungen im Abstrahlverhalten der Lichtverteilung nützlich sind, um das Lasermuster in zweckmäßiger Weise auf dem Untergrund darzustellen, beispielsweise zur Warnung des nachfolgenden Verkehrs vor einer Unterschreitung des Sicherheitsabstands. Erfindungsgemäß ist dazu vorgesehen, dass zunächst wenigstens ein eine Position, und insbesondere eine Ausdehnung, des zu erzeugenden Lasermusters vorgegebener Darstellungsparameter ermittelt wird. Dabei werden Fahrsituationsdaten berücksichtigt, die insbesondere einen Betriebszustand des Kraftfahrzeugs, sein fahrdynamisches Verhalten oder Informationen über das Umfeld des Kraftfahrzeugs umfassen. Der wenigstens eine Darstellungsparameter gibt mithin an, wo, und insbesondere in welcher Ausdehnung, das Lasermuster auf dem befahrenen Untergrund erzeugt werden soll.

Anschließend wird in Abhängigkeit dieses ermittelten Darstellungsparameters wenigstens ein Abstrahlparameter der Lichtverteilung verändert, welcher eine laserheckleuchtenseitige Abstrahlcharakteristik beschreibt. Er kann beispielsweise einen auf das Kraftfahrzeug bezogenen Abstrahlwinkel oder eine auf das Kraftfahrzeug bezogene Ausrichtung der Laserheckleuchte beschreiben. Zur Anpassung umfasst die Laserheckleuchte erfindungsgemäß eine laserlichtemittierende Laserquelle und eine ihr nachgeschaltete Optikeinheit umfassen, wobei zur Veränderung des wenigstens einem Abstrahlparameters der Lichtverteilung wenigstens eine im Strahlenweg des Laserlichts angeordnete und/oder auf die Optikeinheit wirkende Ablenkeinrichtung, insbesondere wenigstens ein mikrooptoelektromechanisches Element und/oder wenigstens ein akusto-optischer Modulator, verwendet wird. Durch eine solche Ablenkeinrichtung lässt sich der wenigstens eine Abstrahlparameter beispielsweise dahingehend modifizieren, dass die Lichtverteilung in einer oder zwei Dimensionen unter einem anderen Abstrahlwinkel abgestrahlt wird. Dafür werden bevorzugt die wenigstens einen Spiegel aufweisenden mikrooptoelektromechanischen Elemente verwendet. Der Abstrahlparameter wird erfindungsgemäß durch ein Verdrehen, Verschwenken und/oder lineares Bewegen der Optikeinheit modifiziert. Schließlich ist es auch denkbar, dass am Kraftfahrzeug Stellmittel vorgesehen sind, die die Ausrichtung und die Position der Laserheckleuchte insgesamt modifizieren und dadurch eine Veränderung des Abstrahlparameters bewirken. Bevorzugt wird für die Heckleuchte rotes Laserlicht verwendet.

Schließlich wird erfindungsgemäß die Lichtverteilung abgestrahlt und das Lasermuster auf dem Untergrund erzeugt.

Durch das erfindungsgemäße Verfahren kann das erzeugte Lasermuster vorteilhafterweise unter Berücksichtigung der aktuellen Fahrsituation des Kraftfahrzeugs angepasst werden, sodass es jederzeit beispielsweise zur Abstandswarnung des nachfolgenden Verkehrs an einer dafür zweckmäßigen Position und/oder in einer zweckmäßigen Ausdehnung dargestellt wird. Ferner kann so gewährlistet werden, dass der nachfolgende Verkehr nicht geblendet wird. Die Laserheckleuchte lässt sich somit wesentlich flexibler betreiben.

Es wird bei dem erfindungsgemäßen Verfahren besonders bevorzugt, wenn wenigstens ein Darstellungsparameter verwendet wird, der in Abhängigkeit von eine nebel- und/oder niederschlagsbedingte Transmissionsfähigkeit für die Lichtverteilung und/oder eine Reflexionsfähigkeit der Fahrbahn für die Lichtverteilung beschreibenden Fahrsituationsdaten ermittelt wird. Diese Fahrsituationsdaten umfassen dabei insbesondere Witterungsdaten, die die Sichtverhältnisse oder den Fahrbahnzustand in Folge von Nebel oder Niederschlägen beschreiben. Dafür können beispielsweise geeignete Witterungssensoren eine Umfeldsensorikeinrichtung am Kraftfahrzeugs vorgesehen sein. Alternativ oder zusätzlich dazu kann wenigstens ein Darstellungsparameter verwendet werden, der in Abhängigkeit von eine Eigengeschwindigkeit des Kraftfahrzeugs beschreibenden Fahrsituationsdaten ermittelt wird. Derartige Fahrsituationsdaten umfassen mithin geeignete Fahrdynamikdaten, die beispielsweise über einen Daten-Bus von einer Fahrdynamikeinrichtung des Kraftfahrzeugs abgerufen werden können. Alternativ oder zusätzlich kann ferner vorgesehen sein, dass wenigstens ein Darstellungsparameter verwendet wird, der in Abhängigkeit von eine Fremdgeschwindigkeit und oder eine Entfernung eines dem Kraftfahrzeug nachfolgendem Verkehrsteilnehmer beschreibenden Fahrsituationsdaten ermittelt wird. Dazu umfassen die Fahrsituationsdaten Objekte in der Umgebung des Kraftfahrzeugs beschreibende Umfelddaten, die zum Beispiel mittels geeigneter Radar-, Lidar- oder Bildsensoren der Umfeldsensorikeinrichtung ermittelt werden oder aus einem Umfeldmodell, das Eingangsdaten verschiedener Sensoren fusioniert, bereitgestellt werden. Es kann somit eine Vielzahl von Einflüssen auf die Fahrsituation bei der Ermittlung des Darstellungsparameter berücksichtigt werden und eine dementsprechend angepasste Lichtverteilung abgestrahlt werden.

Es ist dabei von besonderem Vorteil, wenn der wenigstens eine Darstellungsparameter mit höherer Transmissionsfähigkeit und/oder mit geringerer Reflexionsfähigkeit einen größeren Abstand des Lasermusters zum Kraftfahrzeug vorgibt. Dadurch kann bei besonders guten Transmissionsverhältnissen für die Lichtverteilung ein besonders weiter Abstand des Lasermuster vom Kraftfahrzeug realisiert werden, wohingegen bei starkem Nebel, also wenn die Lichtverteilung gar nicht bis zu der vorgesehen Position des Lasermusters vordringen kann, ein naher Abstand des Lasermusters zum Kraftfahrzeug gewählt wird. Ebenso kann bei einer beispielsweise nässebedingten hohen Reflexionsfähigkeit der Fahrbahn ein näherer Abstand des Lasermusters zum Kraftfahrzeug vorgegeben werden, um den nachfolgenden Verkehr nicht zu blenden. Alternativ oder zusätzlich kann vorgesehen sein, dass der wenigstens eine Darstellungsparameter mit höherer Eigengeschwindigkeit des Kraftfahrzeugs und/oder mit höherer Fremdgeschwindigkeit und/oder mit höherer Entfernung des nachfolgenden Verkehrsteilnehmers einen größeren Abstand des Lasermusters zum Kraftfahrzeug vorgibt. Dadurch kann die Funktion der Laserheckleuchte, den nachfolgenden Verkehr vor einer Unterschreitung des Sicherheitsabstands zu wahren, besonders flexibel an die Fahrsituation angepasst werden. Es kann dazu beispielsweise lediglich auf die Eigengeschwindigkeit abgestellt werden oder aber aus der Fremdgeschwindigkeit der einzuhaltende Sicherheitsabstand des nachfolgenden Verkehrsteilnehmers ermittelt werden und ein entsprechend vom Kraftfahrzeug beabstandetes Lasermuster erzeugt werden. Daneben ist es auch besonders vorteilhaft, wenn bei einer geringen Eigengeschwindigkeit oder einem Stillstand, beispielsweise an einer Ampel oder in einem Stau, ein besonders kleiner Abstand des Lasermusters zum Kraftfahrzeug vorgegeben wird, um ein Blenden des nachfolgenden Verkehrs zu vermeiden.

Es ist bei dem erfindungsgemäßen Verfahren des Weiteren von besonderem Vorteil, wenn wenigstens ein Darstellungsparameter verwendet wird, der in Abhängigkeit von eine Änderung einer Steigung der Fahrbahn beschreibenden Fahrsituationsdaten ermittelt wird und die Position des Lasermusters derart vorgibt, dass eine Veränderung des Abstands des Lasermusters zum Kraftfahrzeug in Folge der Änderung der Steigung zumindest teilweise ausgeglichen wird. Nachdem erkannt wurde, dass es bei einer herkömmlichen, statischen Laserheckleuchte besonders ungünstig ist, dass das Lasermuster bei einer Bergauf- oder Bergabfahrt in Folge der Änderung der Steigung, also der Krümmung der Fahrbahn, seinen Abstand zum Kraftfahrzeug verändert, wird vorgeschlagen, den Darstellungsparameter so vorzugeben, dass die krümmungsbedingte Abstandsänderung ausgeglichen wird. Eine solche Änderung der Steigung beschreibende Fahrsituationsdaten können beispielsweise Topographiedaten aus einer Navigationseinrichtung, Umfelddaten aus einer Umfeldsensorikeinrichtung oder Fahrdynamikdaten aus einer Inertialplattform der Fahrdynamikeinrichtung sein.

Es wird daneben besonders bevorzugt, wenn wenigstens ein Darstellungsparameter verwendet wird, der in Abhängigkeit von eine Kurvenfahrt des Kraftfahrzeugs und/oder eine Topographie des Untergrunds beschreibenden Fahrsituationsdaten ermittelt wird und die Position und/oder die Ausdehnung derart vorgibt, dass das Lasermuster auf einer vom Kraftfahrzeug aktuell befahrenen Fahrspur dargestellt wird. Da es auch bei Kurvenfahrten erwünscht ist, dass das Lasermuster auf der vom Kraftfahrzeug aktuell befahrenen Fahrspur sichtbar ist und nicht wie bei einer statischen Laserheckleuchte durch die veränderte Ausrichtung des Kraftfahrzeugs auf einer Nebenfahrspur, der Gegenfahrbahn oder abseits der Fahrbahn angezeigt wird, kann der Abstrahlparameter so angepasst werden, dass das Lasermuster beispielsweise durch Änderung des horizontalen Abstrahlwinkels oder durch Verkürzen seiner Ausdehnung in Bereichen, die nicht auf der aktuell befahrenen Fahrspur liegen, weiterhin auf der befahrenen Fahrspur dargestellt wird. Dabei kann auf Fahrdynamikdaten zurückgegriffen werden, die insbesondere die Gierrate des Kraftfahrzeugs beschreiben. Ebenfalls können auch hier Topographiedaten der Navigationseinrichtung oder Umfelddaten der Umfeldsensorikeinrichtung, die den Fahrspurverlauf beschreiben, verwendet werden.

Erfindungsgemäß ist vorgesehen, dass der Darstellungsparameter zusätzlich eine Ausrichtung des Lasermusters derart vorgibt, dass das Lasermuster senkrecht zu einem Fahrspurverlauf der Fahrspur dargestellt wird. Dadurch behält das Lasermuster vorteilhafterweise seine Ausrichtung, die dem nachfolgenden Verkehr intuitiv den einzuhaltenden Sicherheitsabstand aufzeigt. Des Weiteren ist bei dem erfindungsgemäßen Verfahren vorgesehen, dass in einer Standardfahrsituation ein Lasermuster in Balkenform erzeugt wird. Ein solches Lasermuster lässt sich vorteilhafterweise besonders leicht erzeugen und hat auf den nachfolgenden Verkehr eine intuitiv verständliche Warnwirkung im Sinne einer "roten Linie", die nicht überfahren werden soll, um den Sicherheitsabstand nicht zu unterschreiten.

Dabei kann es aber mit besonderem Vorteil auch vorgesehen sein, dass bei einer, insbesondere aus den Fahrsituationsdaten ermittelten, Stausituation das Lasermuster in einer Warnzeichenform erzeugt wird. Dies wird besonders bevorzugt in einer Stausituation durchgeführt, in der sich das Kraftfahrzeug am Stauende befindet und so die Gefahr von Auffahrunfällen gegeben ist. der das Stauende nicht erkennt. Das Lasermuster kann dann zum Beispiel im Form eines Warndreiecks oder eines Ausrufezeichens erzeugt werden, sodass ein nachfolgender Verkehrsteilnehmer dies bereits aus einer größeren Entfernung auf dem vor ihm liegenden Fahrbahnuntergrund erkennt und seine Geschwindigkeit beim Zufahren auf das Stauende verringern kann.

Schließlich ist es im Rahmen des erfindungsgemäßen Verfahrens besonders zweckmäßig, wenn als Abstrahlparameter ein horizontaler und/oder vertikaler Abstrahlwinkel der Lichtverteilung verändert wird. Durch eine Veränderung des vertikalen Abstrahlwinkels kann dabei der Abstand des Lasermusters zum Kraftfahrzeug verändert werden und durch den horizontalen Abstrahlwinkel die seitliche Position bezüglich der Fahrzeuglängsachse angepasst werden.

Daneben betrifft die Erfindung eine Laserheckleuchte mit den Merkmalen des Anspruchs 9.

Es ist bei der erfindungsgemäßen Heckleuchte vorgesehen, dass die Laserheckleuchte eine laserlichtemittierende Laserquelle und eine ihr nachgeschaltete Optikeinheit umfasst, wobei zur Veränderung des wenigstens einen Abstrahlparameter der Lichtverteilung wenigstens eine im Strahlenweg des Laserlichts angeordnete und/oder auf die Optikeinheit wirkende Ablenkeinrichtung, insbesondere ein mikrooptoelektromechanisches Element und/oder wenigstens ein akustooptischer Modulator, vorgesehen ist.

Daneben betrifft die Erfindung ein Kraftfahrzeug, umfassend wenigstens eine heckseitig angeordnete erfindungsgemäße Laserheckleuchte.

Sämtliche Ausführungen zum erfindungsgemäßen Verfahren lassen sich auf die erfindungsgemäße Laserheckleuchte und das erfindungsgemäße Kraftfahrzeug übertragen, sodass auch mit diesen die bereits genannten Vorteile erzielt werden können.

Weitere Vorteile und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung eines erfindungsgemäßen Kraftfahrzeugs, umfassend eine erfindungsgemäße Laserheckleuchte; und
- Fig. 2-4: das Kraftfahrzeug in unterschiedlichen Fahrsituationen.

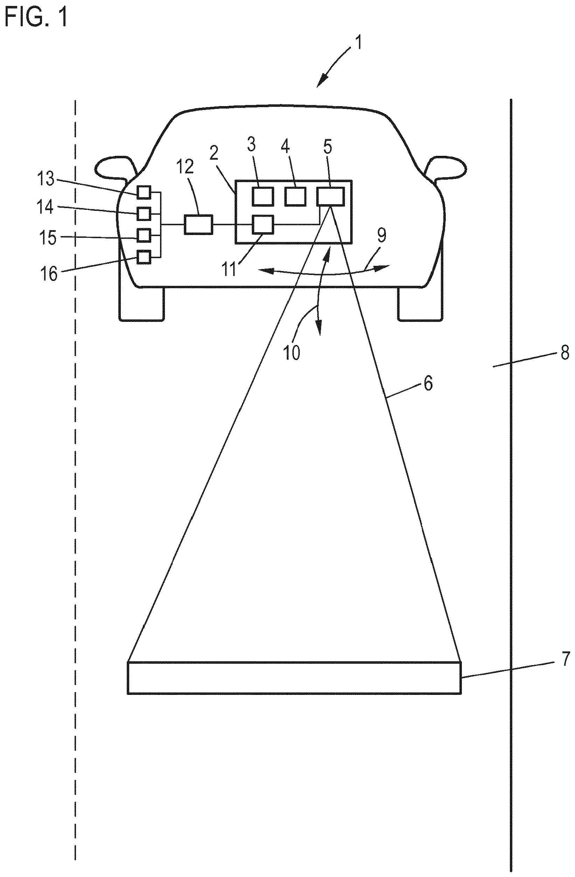

Fig. 1 ist eine Prinzipskizze eines Kraftfahrzeugs 1, umfassend eine Laserheckleuchte 2. Diese Laserheckleuchte 2 weist eine Laserquelle 3 zur Erzeugung von Laserlicht auf, welcher eine Optikeinheit 4 nachgeschaltet ist, wobei das Laserlicht nach Durchlaufen der Optikeinheit auf eine Ablenkeinrichtung 5 trifft, von welcher eine Lichtverteilung 6 zur Erzeugung eines Lichtmusters 7 auf einem vom Kraftfahrzeug 1 befahrenen Untergrund 8 abgestrahlt wird.

Die Ablenkeinrichtung 5 ist als mikrooptoelektromechanisches Element (MOEMS) ausgebildet, welches das Laserlicht zur Erzeugung der Lichtverteilung 6 in einem horizontalen Abstrahlwinkel, symbolisiert durch den Doppelpfeil 9, und einen vertikalen Abstrahlwinkel symbolisiert durch den Doppelpfeil 10, ablenken kann. Es ist daneben auch denkbar, dass die Ablenkeinheit 5 alternativ oder zusätzlich in nicht dargestellter Weise auf die Optikeinheit 4 zur Veränderung des vertikalen und/oder horizontalen Abstrahlwinkels wirkt, beispielsweise durch ein piezoelektrisches Stellelement.

Die Laserheckleuchte 2 weist ferner eine Steuereinrichtung 11 auf, die über ein Bus-System 12 mit weiteren Komponenten des Kraftfahrzeugs 1 verbunden ist, welche eine aktuelle Fahrsituation des Kraftfahrzeugs 1 beschreibende Fahrsituationsdaten bereitstellen. Bei den Komponenten handelt es sich um eine Fahrdynamikeinrichtung 13, eine Umfeldsensorikeinrichtung 14, eine Navigationseinrichtung 15 und eine Kommunikationseinrichtung 16. Dabei stellt die Fahrdynamikeinrichtung 13 Fahrdynamikdaten des Kraftfahrzeugs 1 bereit, welche eine Eigengeschwindigkeit des Kraftfahrzeugs 1, einen eingeschlagenen Lenkwinkel, eine Gierrate sowie weitere Informantionen aus einer Inertialplattform des Kraftfahrzeugs 1 beschreiben. Über die Umfeldsensorikeinrichtung 14 erhält die Steuereinrichtung 11 Informationen über eine Position und eine Fremdgeschwindigkeit anderer Objekte im Umfeld des Kraftfahrzeugs sowie Witterungsdaten, die eine nebel- und/oder niederschlagsbedingte Transmissionsfähigkeit der Umgebung des Kraftfahrzeugs 1 und die Reflexionsfähigkeit des Untergrunds 8 beschreiben.

Die Navigationseinrichtung 15 liefert Topographiedaten über das Umfeld des Kraftfahrzeugs 1, insbesondere über den befahrenen Untergrund 8. Schließlich können Fahrsituationsdaten, die jenen entsprechen, die von der Fahrdynamikeinrichtung 13, der Umfeldsensorikeinrichtung 14 und der Navigationseinrichtung 15 stammen, auch durch die Kommunikationseinrichtung 16 empfangen werden, welche eine Kommunikationsverbindung mit entfernten Kommunikationsstellen über eine drahtlose Schnittstelle aufbaut, insbesondere eine Internetverbindung und/oder eine Fahrzeug-zu-Fahrzeug-Verbindung mit anderen Kraftfahrzeugen.

Ein erfindungsgemäßes Verfahren zum Betrieb der im Kraftfahrzeug 1 angeordneten Laserheckleuchte 2, welches von der Steuereinrichtung 11 durchgeführt wird, wird im Folgenden beschrieben:
In einem ersten Schritt werden in Abhängigkeit der die aktuelle Fahrsituation des Kraftfahrzeugs 1 beschreibenden Fahrsituationsdaten mehrere die Position und die Ausdehnung des zur erzeugenden Lasermusters 7 vorgebende Darstellungsparameter ermittelt. Diese beschreiben mithin, wo und in welcher Ausdehnung das Lasermuster 7 auf dem Untergrund 8 dargestellt werden soll. Dazu berücksichtigt die Steuereinrichtung 11 sämtliche von der Fahrdynamikeinrichtung 13, der Umfeldsensorikeinrichtung 14, der Navigationseinrichtung 15 und der Kommunikationseinrichtung 16 bereitgestellte Fahrsituationsdaten und ermittelt in deren Abhängigkeit die Darstellungsparameter.

In einem nächsten Schritt werden in Abhängigkeit der Darstellungsparameter Abstrahlparameter der Lichtverteilung 6 verändert, wozu die Steuereinrichtung 11 die Ablenkeinrichtung 5 entsprechend ansteuert. Dabei wird der vertikale und der horizontale Abstrahlwinkel so angepasst, dass das Lasermuster 7 an der durch die Darstellungsparameter vorgegebenen Position und der durch sie vorgegebenen Ausdehnung auf dem Untergrund 8 erzeugt wird. Schließlich wird die Lichtverteilung 6 zur Erzeugung des Lasermusters 7 abgestrahlt.

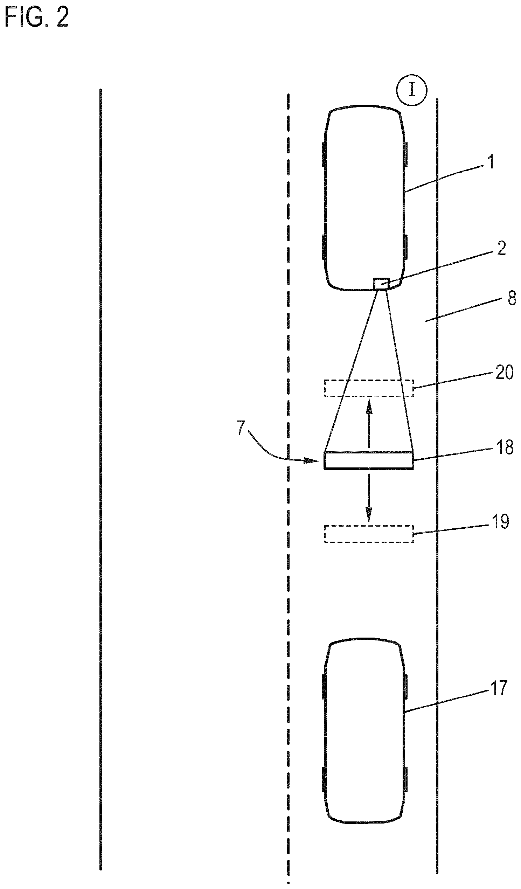

Die Figuren 2 bis 4 zeigen beispielhafte Fahrsituationen während der Durchführung des Verfahrens, anhand derer die zuvor beschriebenen Verfahrensschritte detailliert erläutert werden.

Figur 2 zeigt das Kraftfahrzeug 1 während einer Fahrsituation I bei einer Geradeausfhart mit einem nachfolgenden Verkehrsteilnehmer 17 in Form eines weiteren Kraftfahrzeugs. Die Laserheckleuchte 2 des Kraftfahrzeugs 1 erzeugt dabei das Lasermuster 7 an der Position 19, welches vornehmlich den Zweck hat, den Verkehrsteilnehmer 17 auf einen korrekten Sicherheitsabstand zum Kraftfahrzeug 1 hinzuweisen.

Erhöht sich in der gezeigten Fahrsituation I die Fremdgeschwindigkeit des Verkehrsteilnehmers 17, so wird unter Berücksichtigung der mittels der Umfeldsensorikeinrichtung 14 bereitgestellten Umfelddaten ein Darstellungsparameter ermittelt, der einen größeren Abstand des Lasermusters 7 zum Kraftfahrzeug 1 vorgibt, da bei der höheren Fremdgeschwindigkeit ein größerer Sicherheitsabstand des Verkehrsteilnehmers 17 einzuhalten ist. Das Lasermuster 7 wird dann an einer Position 19 dargestellt, wobei die Ablenkeinrichtung 5 einen entsprechend veränderten vertikalen Abstrahlwinkel bewirkt. Umgekehrt wird bei einer geringeren Fremdgeschwindigkeit des Verkehrsteilnehmers 17 das Lasermuster 7 an einer Position 20 dargestellt wird. Alternativ dazu kann in analoger Weise das Lasermuster 7 auch in einem größeren Abstand zum Kraftfahrzeug 1 an der Position 19 dargestellt werden, wenn die Eigengeschwindigkeit des Kraftfahrzeugs 1 erhöht wird. Dabei wird von der Eigengeschwindigkeit auf einen einzuhaltenden Sicherheitsabstand geschlossen. In diesem Fall wird anhand der durch die Fahrdynamikeinrichtung 13 bereitgestellten Fahrdynamikdaten ein Darstellungsparameter ermittelt.

Daneben dient die die zuvor beschriebene Abstandsanpassung des Lasermusters 7 in Abhängigkeit der Eigengeschwindigkeit auch dem Blendschutz des nachfolgenden Verkehrsteilnehmers 17, da so bei einem Stillstand eine besonders nahe Position des Lasermusters 7 zum Kraftfahrzeug 1 gewählt wird. Ebenso kann auch ein Darstellungsparameter in Abhängigkeit von eine Entfernung des Verkehrsteilnehmers 17 zum Kraftfahrzeug 1 beschreibenden Umfelddaten der Umfeldsensorikeinrichtung 14 bestimmt werden, wodurch stets gewährleistet werden kann, dass das der Abstand des Lasermusters 7 zum Kraftfahrzeug 1 geringer ist als die Entfernung zum nachfolgenden Verkehrsteilnehmer 17. Um eine Blendung des Verkehrsteilnehmers 17 zu vermeiden, ist ferner vorgesehen, dass durch die Umfeldsensorikeinrichtung 14 Witterungsdaten bereitgestellt werden, welche eine nebel- und niederschlagsbedingte Transmissionsfähigkeit für die Lichtverteilung 6 im Umfeld des Kraftfahrzeugs 1 beschreiben. Bei einer geringen Transmissionsfähigkeit infolge einer hohen Nebeldichte oder Starkregens wird das Lasermuster 7 näher am Kraftfahrzeug 1 dargestellt, mithin in Richtung der Position 20 verschoben, um eine Blendung des Verkehrsteilnehmers 17 zu vermeiden. Ebenso ist vorgesehen, dass bei einer hohen Reflexionsfähigkeit des Untergrunds 8 infolge von Fahrbahnnässe, welche ebenfalls durch die Witterungsdaten beschrieben wird, ein geringer Abstand des Lasermusters 7 zum Kraftfahrzeug 1 gewählt wird.

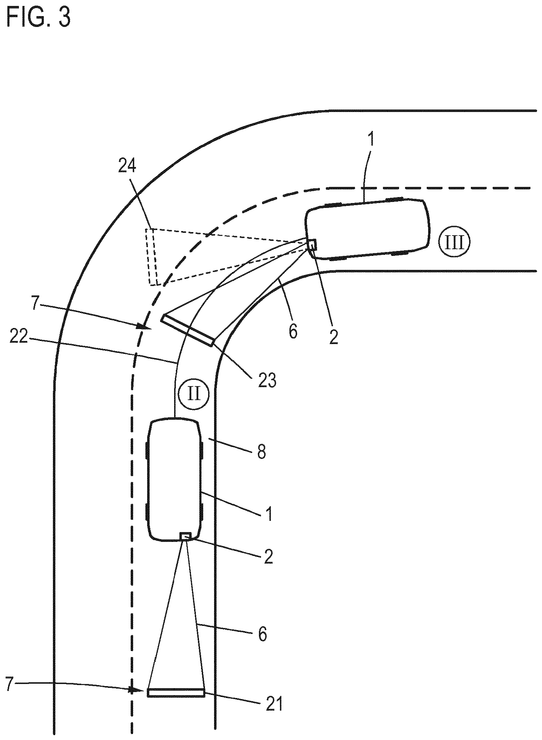

Figur 3 zeigt das Kraftfahrzeug 1 in zwei weiteren Fahrsituationen II und III. In der Fahrsituation II wird das Lasermuster 7 an einer Position 21 erzeugt. Wie ersichtlich steuert das Kraftfahrzeug 1 auf eine Kurve zu und folgt dabei einem Fahrspurverlauf 22, bis es sich in der Fahrsituation III befindet. Die Steuereinrichtung 11 erhält dazu diese Kurvenfahrt beschreibende Fahrdynamikdaten von der Fahrdynamikeinrichtung 13, Umfelddaten der Umfeldsensorikeinrichtung 14 sowie Topographiedaten der Navigationseinrichtung 15 und ermittelt daraus einen Darstellungsparameter, der das Erzeugen des Lasermusters 7 an der Position 23 vorgibt, wobei das Lasermuster 7 senkrecht zum Fahrspurverlauf 22 ausgerichtet ist. Dazu wird der horizontale Abstrahlwinkel des Lichtverteilung 6 entsprechend durch die Ablenkeinrichtung 5 verändert. Ohne diese Veränderung würde das Lasermuster 7 an einer unerwünschten Position 24 erzeugt werden, welche auf der Gegenfahrbahn liegt und anderen Verkehr irritieren könnte.

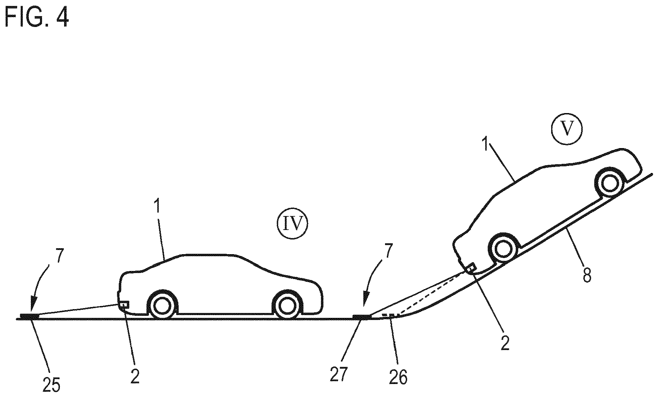

Figur 4 zeigt das Kraftfahrzeug 1 während zwei Fahrsituation IV, V. In der Fahrsituation IV nähert sich das Kraftfahrzeug 1 in der Steigungsstrecke, wobei das Lasermuster 7 an einer Position 25 erzeugt wird. Bei einer Weiterfahrt befindet sich das Kraftfahrzeug 1 in der Fahrsituation V, in der aufgrund der Änderung der Steigung, mithin der Krümmung, des Untergrunds 8 ein unveränderter Abstellparameter das Lasermuster 7 in einem zu niedrigen Abstand zum Kraftfahrzeug 1 an einer Position 26 erzeugen würde. Um dies zu verhindern, wird aufgrund von Fahrdynamikdaten der Fahrdynamikeinrichtung 13 Umfelddaten der Umfeldsensorikeinrichtung 14 und Topographiedaten der Navigationseinrichtung 15 ein Darstellungsparameter ermittelt, der die Änderung der Steigung des Untergrunds 8 ausgleicht und das Lasermuster 7 an einer Position 27 mit gleichem Abstand zum Kraftfahrzeug 1 wie die Position 25 erzeugt. Dazu wird der vertikale Abstrahlwinkel entsprechend verändert. So wird gewährleistet, dass auch bei einer Bergauffahrt die Abstandswarnfunktion der Laserheckleuchte 2 ordnungsgemäß erfüllt wird. Analog dazu erfolgt bei einer Bergabfahrt ein entsprechend entgegengerichteter Ausgleich.

## Patentansprüche

1. Verfahren zum Betrieb einer in einem Kraftfahrzeug (1) angeordneten Laserheckleuchte (2), welche eine Laserlicht emittierende Laserquelle (3) und eine ihr nachgeschaltete Optikeinheit (4) umfasst und eine ein Lasermuster (7) auf einem vom Kraftfahrzeug (1) befahrenen Untergrund (8) erzeugende Lichtverteilung (6) abstrahlt, wobei in Abhängigkeit von einer Kurvenfahrt (II, III) des Kraftfahrzeugs (1) beschreibenden Fahrsituationsdaten mittels Fahrdynamikdaten einer Fahrdynamikeinrichtung (13) des Kraftfahrzeugs (1) und/oder Umfelddaten einer Umfeldsensorikeinrichtung (14) des Kraftfahrzeugs (1), die den Fahrspurverlauf beschreiben, wenigstens ein eine Position (18, 21, 23, 25, 27) des zu erzeugenden Lasermusters (7) vorgebender Darstellungsparameter ermittelt wird, wonach in Abhängigkeit des Darstellungsparameters wenigstens ein Abstrahlparameter der Lichtverteilung (6) verändert wird, wobei als Abstrahlparameter ein horizontaler Abstrahlwinkel (9) der Lichtverteilung (6) derart verändert wird, dass die seitliche Position des Lasermusters (7) bezüglich der Fahrzeuglängsachse angepasst wird, wobei der wenigstens eine Darstellungsparameter die Position (21, 23) derart vorgibt, dass das Lasermuster (7) auf einer vom Kraftfahrzeug (1) aktuell befahrenen Fahrspur dargestellt wird, wobei zur Veränderung des wenigstens einen Abstrahlparameters der Lichtverteilung (6) wenigstens eine im Strahlenweg des Laserlichts angeordnete und/oder durch Verdrehen, Verschwenken und/oder lineares Bewegen auf die Optikeinheit (4) wirkende Ablenkeinrichtung (5), insbesondere wenigstens ein mikrooptoelektromechanisches Element und/oder wenigstens ein akustooptischer Modulator, verwendet wird, wobei der Darstellungsparameter zusätzlich eine Ausrichtung des Lasermusters (7) derart vorgibt, dass das Lasermuster (7), das in einer Standardfahrsituation in Balkenform erzeugt wird, während der Kurvenfahrt senkrecht zu einem Fahrspurverlauf (22) auf der vom Fahrzeug aktuell befahrenen Fahrspur dargestellt wird.

2. Verfahren nach Anspruch 1,
**dadurch gekennzeichnet,**
**dass** der Darstellungsparameter und/oder wenigstens ein weiterer Darstellungsparameter, der von eine aktuelle Fahrsituation (I-V) des Kraftfahrzeugs (1) beschreibenden Fahrsituationsdaten abhängt, die die Kurvenfahrt und/oder eine Topographie des Untergrunds (8) beschreiben, die Ausdehnung des zu erzeugenden Lasermusters (7) derart vorgibt, dass das Lasermuster (7) auf der vom Kraftfahrzeug (1) aktuell befahrenen Fahrspur dargestellt wird, wonach in Abhängigkeit dieses Darstellungsparameters der oder wenigstens ein weiterer Abstrahlparameter der Lichtverteilung (6) verändert wird.

3. Verfahren nach Anspruch 1 oder 2,
**dadurch gekennzeichnet,**
**dass** der Darstellungsparameter und/oder der wenigstens eine weitere Darstellungsparameter und/oder wenigstens ein weiterer Darstellungsparameter, der von eine aktuelle Fahrsituation (I-V) des Kraftfahrzeugs (1) beschreibenden Fahrsituationsdaten abhängt, die die Kurvenfahrt und/oder eine Topographie des Untergrunds (8) beschreiben, verwendet wird, der in Abhängigkeit von eine nebel- und/oder niederschlagsbedingte Transmissionfähigkeit für die Lichtverteilung (6) und/oder eine Reflexionsfähigkeit der Fahrbahn für die Lichtverteilung (6) und/oder eine Eigengeschwindigkeit des Kraftfahrzeugs (1) und/oder eine Fremdgeschwindigkeit und/oder eine Entfernung eines dem Kraftfahrzeug nachfolgenden Verkehrsteilnehmers (17) beschreibenden Fahrsituationsdaten ermittelt wird.

4. Verfahren nach Anspruch 3,
**dadurch gekennzeichnet,**
**dass** der Darstellungsparameter und/oder der wenigstens eine weitere Darstellungsparameter mit höherer Transmissionsfähigkeit und/oder mit geringerer Reflexionsfähigkeit und/oder mit höherer Eigengeschwindigkeit und/oder mit höherer Fremdgeschwindigkeit und/oder mit höherer Entfernung des nachfolgenden Verkehrsteilnehmers (17) einen größeren Abstand des Lasermusters (7) zum Kraftfahrzeug (1) vorgibt.

5. Verfahren nach einem der vorhergehenden Ansprüche,
**dadurch gekennzeichnet,**
**dass** der Darstellungsparameter und/oder der wenigstens eine weitere Darstellungsparameter und/oder wenigstens ein weiterer Darstellungsparameter, der von eine aktuelle Fahrsituation (I-V) des Kraftfahrzeugs (1) beschreibenden Fahrsituationsdaten abhängt, die die Kurvenfahrt und/oder eine Topographie des Untergrunds (8) beschreiben, verwendet wird, der in Abhängigkeit von eine Änderung einer Steigung der Fahrbahn beschreibenden Fahrsituationsdaten ermittelt wird und die Position des Lasermusters (7) derart vorgibt, dass eine Veränderung des Abstands des Lasermusters (7) zum Kraftfahrzeug (1) infolge der Änderung der Steigung zumindest teilweise ausgeglichen wird.

6. Verfahren nach einem der vorhergehenden Ansprüche,
**dadurch gekennzeichnet,**
**dass** der Darstellungsparameter und/oder der wenigstens eine weitere Darstellungsparameter und/oder wenigstens ein weiterer Darstellungsparameter verwendet wird, der in Abhängigkeit von eine Topografie des Untergrunds (8) beschreibenden Fahrsituationsdaten ermittelt wird und die Position (21, 23) derart vorgibt, dass das Lasermuster (7) auf einer vom Kraftfahrzeug (1) aktuell befahrenen Fahrspur dargestellt wird.

7. Verfahren nach einem der vorangehenden Ansprüche,
**dadurch gekennzeichnet,**
**dass** bei einer, insbesondere aus den Fahrsituationsdaten ermittelten, Stausituation das Lasermuster (7) in einer Warnzeichenform erzeugt wird.

8. Verfahren nach einem der vorhergehenden Ansprüche,
dass als weiterer Abstrahlparameter ein vertikaler Abstrahlwinkel (10) der Lichtverteilung (6) verändert wird.

9. Laserheckleuchte (2) für ein Kraftfahrzeug (1) zum Abstrahlen einer ein Lasermuster (7) auf einem vom Kraftfahrzeug befahrenen Untergrund erzeugenden Lichtverteilung (6), umfassend eine Laserlicht emittierende Laserquelle (3), eine ihr nachgeschaltete Optikeinheit (4) und eine Steuereinrichtung zur Durchführung eines Verfahrens nach einem der vorhergehenden Ansprüche, wobei der Darstellungsparameter anhand von Fahrdynamikdaten einer Fahrdynamikeinrichtung (13) des Kraftfahrzeugs (1) und/oder Umfelddaten einer Umfeldsensorikeinrichtung (14) des Kraftfahrzeugs (1), die den Fahrspurverlauf beschreiben, ermittelbar ist, wobei als Abstrahlparameter ein horizontaler Abstrahlwinkel der Lichtverteilung (6) derart veränderbar ist, dass die seitliche Position des Lasermusters (7) bezüglich der Fahrzeuglängsachse anpassbar ist, wobei zur Veränderung des wenigstens einen Abstrahlparameters der Lichtverteilung (6), der in Abhängigkeit des Darstellungsparameters veränderbar ist, wenigstens eine im Strahlenweg des Laserlichts angeordnete und/oder durch Verdrehen, Verschwenken und/oder lineares Bewegen auf die Optikeinheit (4) wirkende Ablenkeinrichtung (5), insbesondere wenigstens ein mikrooptoelektromechanisches Element und/oder wenigstens ein akustooptischer Modulator, vorgesehen ist, wobei die Steuerungseinrichtung dazu eingerichtet wird, dass in Abhängigkeit von eine Kurvenfahrt (II, III) des Kraftfahrzeugs (1) beschreibenden Fahrsituationsdaten wenigstens ein eine Position (18, 21, 23, 25, 27) des zu erzeugenden Lasermusters (7) vorgebender Darstellungsparameter ermittelt wird, wobei der wenigstens eine Darstellungsparameter die Position (21, 23) derart vorgibt, dass das Lasermuster (7) auf der vom Kraftfahrzeug (1) aktuell befahrenen Fahrspur dargestellt wird, wobei der Darstellungsparameter zusätzlich eine Ausrichtung des Lasermusters (7) derart vorgibt, dass das Lasermuster (7), das in einer Standardfahrsituation in Balkenform erzeugt wird, während der Kurvenfahrt senkrecht zu einem Fahrspurverlauf (22) auf der vom Fahrzeug aktuell befahrenen Fahrspur dargestellt wird.

10. Kraftfahrzeug (1), umfassend wenigstens eine heckseitig angeordnete Laserheckleuchte (2) nach Anspruch 9.

## Claims

1. Method for operating a rear laser lamp (2) installed in a motor vehicle (1), which comprises a laser source (3) emitting laser light and an optical unit (4) connected downstream thereof and which irradiates a light distribution (6) producing a laser pattern (7) on a substrate (8) travelled on by the motor vehicle (1), wherein, as a function of driving situation data describing cornering (II, III) of the motor vehicle (1), by means of driving dynamics data of a driving dynamics device (13) of the motor vehicle (1) and/or environment data of an environmental sensing device (14) of the motor vehicle (1), which describe the course of the lane, at least one display parameter which specifies a position (18, 21, 23, 25, 27) of the laser pattern (7) that is to be generated is determined, after which at least one irradiation parameter of the light distribution (6) is changed as a function of the display parameter, wherein as irradiation parameter a horizontal irradiation angle (9) of the light distribution (6) is changed, in such a way that the lateral position of the laser pattern (7) with respect to the longitudinal axis of the vehicle is adjusted, wherein the at least one display parameter specifies the position (21, 23) in such a way that the laser pattern (7) is displayed on a lane currently being travelled on by the motor vehicle (1), wherein, for changing the at least one irradiation parameter of the light distribution (6), at least one deflector device (5) that is arranged in the beam path of the laser light and/or that acts on the optical unit by twisting, pivoting and/or linear movement, in particular at least one micro-optoelectromechanical element and/or at least one acousto-optical modulator, is used, wherein the display parameter additionally specifies an orientation of the laser pattern (7) in such a way that the laser pattern (7), which in a standard driving situation is generated in bar form, is displayed during cornering on the lane currently being travelled on by the vehicle, perpendicularly to a course of the lane (22).

2. Method according to claim 1,
**characterised in that**
the display parameter and/or at least one further display parameter, which depends on driving situation data describing a current driving situation (I-V) of the motor vehicle (1), which driving situation data describe the cornering and/or a topography of the substrate (8), specifies the extent of the laser pattern (7) that is to be generated in such a way that the laser pattern (7) is displayed on the lane currently being travelled on by the motor vehicle (1), after which as a function of this display parameter the or at least one further irradiation parameter of the light distribution (6) is changed.

3. Method according to claim 1 or 2,
**characterised in that**
the display parameter and/or the at least one further display parameter and/or at least one further display parameter which depends on driving situation data describing a current driving situation (I-V) of the motor vehicle (1), which driving situation data describe the cornering and/or a topography of the substrate (8), is used, which is determined as a function of driving situation data describing a fog- and/or precipitationrelated transmissibility for the light distribution (6) and/or a reflectivity of the road surface for the light distribution (6) and/or a speed of the motor vehicle (1) itself and/or a third-party speed and/or a distance of a road user (17) following the motor vehicle.

4. Method according to claim 3,
**characterised in that**
the display parameter and/or the at least one further display parameter with higher transmissibility and/or with lower reflectivity and/or with its own higher speed and/or with higher third-party speed and/or with greater distance of the following road user (17) specifies a greater spacing of the laser pattern (7) from the motor vehicle (1).

5. Method according to any one of the preceding claims,
**characterised in that**
the display parameter and/or the at least one further display parameter and/or at least one further display parameter which depends on driving situation data describing a current driving situation (I-V) of the motor vehicle (1), which driving situation data describes the cornering and/or a topography of the substrate (8), is used, which is determined as a function of driving situation data describing a change in a gradient of the roadway and which specifies the position of the laser pattern (7) in such a way that a change in the spacing of the laser pattern (7) from the motor vehicle (1) as a result of the change in the gradient is at least partially compensated for.

6. Method according to any one of the preceding claims,
**characterised in that**
the display parameter and/or the at least one further display parameter and/or at least one further display parameter is used, which is determined as a function of driving situation data describing a topography of the substrate (8) and specifies the position (21, 23) in such a way that the laser pattern (7) is displayed on a lane currently being travelled on by the motor vehicle (1).

7. Method according to any one of the preceding claims,
**characterised in that**
the laser pattern (7) is generated in the form of a warning sign in the event of a traffic congestion situation, in particular determined from the driving situation data.

8. Method according to any one of the preceding claims,
that, as further irradiation parameter, a vertical beam angle of the light distribution (6) is changed.

9. Laser rear lamp (2) for a motor vehicle (1) for irradiating a light distribution (6) which produces a laser pattern (7) on a substrate which is being travelled on by the motor vehicle, comprising a laser source (3) which emits laser light, an optical unit (4) which is connected downstream thereof, and a control device for carrying out a method according to any one of the preceding claims, wherein the display parameter can be determined on the basis of driving dynamics data of a driving dynamics device (13) of the motor vehicle (1) and/or environment data of an environmental sensing device (14) of the motor vehicle (1), which describe the course of the lane, wherein as irradiation parameter a horizontal radiation angle (9) of the light distribution (6) can be changed in such a way that the lateral position of the laser pattern (7) can be adjusted with respect to the longitudinal axis of the vehicle, wherein, in order to change the at least one irradiation parameter of the light distribution (6), which can be changed as a function of the display parameter, at least one deflector device (5) that is arranged in the beam path of the laser light and/or which acts on the optical unit (4) by twisting, pivoting and/or linear movement, in particular at least one micro-optoelectromechanical element and/or at least one acousto-optical modulator, is provided, wherein the control device is adapted in such a way that at least one display parameter that specifies a position (18, 21, 23, 25, 27) of the laser pattern (7) that is to be generated is determined as a function of driving situation data describing a cornering (II, III) of the motor vehicle (1), wherein the at least one display parameter specifies the position (21, 23) in such a way that the laser pattern (7) is displayed on the lane currently being travelled on by the motor vehicle (1), the display parameter additionally specifying an orientation of the laser pattern (7) in such a way that the laser pattern (7), which in a standard driving situation is generated in bar form, is displayed during cornering on the lane currently being travelled on by the vehicle, perpendicularly to a course of the lane (22).

10. Motor vehicle (1), comprising on the rear side at least one rear laser lamp (2) according to claim 9.

## Revendications

1. Procédé de fonctionnement d'un feu arrière laser (2) monté dans un véhicule automobile (1), lequel comprend une source de laser (3) émettant une lumière laser et une unité d'optique (4) en aval de celle-ci et fait rayonner une répartition de lumière (6) générant un motif laser (7) sur un sol (8) parcouru par un véhicule automobile (1), dans lequel en fonction de données de situation de conduite décrivant un virage (II, III) du véhicule automobile (1) au moyen de données de dynamique de conduite d'un dispositif de dynamique de conduite (13) du véhicule automobile (1) et/ou de données d'environnement d'un dispositif de capteur d'environnement (14) du véhicule automobile (1) qui décrivent le tracé de voie de circulation, au moins un paramètre d'affichage définissant une position (18, 21, 23, 25, 27) du motif laser (7) à générer est déterminé, après quoi en fonction du paramètre d'affichage au moins un paramètre de rayonnement de la répartition de lumière (6) est modifié, dans lequel en tant que paramètre de rayonnement un angle de rayonnement horizontal (9) de la répartition de lumière (6) est modifié de telle sorte que la position latérale du motif laser (7) concernant l'axe longitudinal du véhicule automobile est ajustée, dans lequel l'au moins un paramètre d'affichage définit la position (21, 23) de telle sorte que le motif laser (7) est représenté sur une voie de circulation parcourue à ce moment par le véhicule automobile (1), dans lequel pour la modification de l'au moins un paramètre de rayonnement de la répartition de lumière (6) au moins un dispositif de déflecteur (5) monté dans le trajet de rayonnement de la lumière laser et/ou agissant par rotation, basculement et/ou mouvement linéaire sur l'unité optique (4), en particulier au moins un élément micro-opto-électromécanique et/ou au moins un modulateur acousto-optique est utilisé, dans lequel le paramètre d'affichage définit en outre une direction du motif laser (7) de telle sorte que le motif laser (7) qui est généré sous la forme d'une barre dans une situation de conduite standard est affiché perpendiculairement pendant le virage par rapport à un tracé de voie de circulation (22) sur la voie de circulation parcourue à ce moment par le véhicule automobile.

2. Procédé selon la revendication 1,
**caractérisé en ce que**,
le paramètre d'affichage et/ou au moins un autre paramètre d'affichage qui dépend de données de situation de conduite décrivant une situation de conduite du moment (I-V) du véhicule automobile (1) qui décrivent le virage et/ou une topographie du sol (8) définit l'étendue du motif laser (7) à générer, de telle sorte que le motif laser (7) s'affiche sur la voie de circulation parcourue à ce moment par le véhicule automobile (1), après quoi en fonction de ce paramètre d'affichage, le paramètre de rayonnement ou au moins un autre paramètre de rayonnement de la répartition de lumière (6) est modifié.

3. Procédé selon la revendication 1 ou 2,
**caractérisé en ce que**
le paramètre d'affichage et/ou l'au moins un autre paramètre d'affichage et/ou au moins un autre paramètre d'affichage qui dépend de données de situation de conduite décrivant une situation de conduite (I-V) du moment du véhicule automobile (1) qui décrivent le virage et/ou une topographie du sol (8) est utilisé, qui est déterminé en fonction de données de situation de conduite décrivant une capacité de transmission conditionnée par le brouillard et/ou des précipitations pour la répartition de lumière (6) et/ou une capacité de réflexion de la route pour la répartition de lumière (6) et/ou une vitesse propre du véhicule automobile (1) et/ou une vitesse étrangère et/ou un éloignement d'un usager de la route (17) suivant le véhicule automobile.

4. Système selon la revendication 3,
**caractérisé en ce que**
le paramètre d'affichage et/ou l'au moins un autre paramètre d'affichage définit un intervalle plus grand du motif laser (7) par rapport au véhicule automobile (1) avec une capacité de transmission supérieure et/ou avec une capacité de réflexion réduite et/ou avec une vitesse propre supérieure et/ou avec une vitesse étrangère supérieure et/ou avec un éloignement supérieur de l'usager de la route suivant (17).

5. Procédé selon l'une quelconque des revendications précédentes,
**caractérisé en ce que**
le paramètre d'affichage et/ou l'au moins un autre paramètre d'affichage et/ou au moins un autre paramètre d'affichage qui dépend de données de situation de conduite décrivant une situation de conduite (I-V) du moment du véhicule automobile (1) qui décrivent le virage et/ou une topographie du sol (8), est utilisé, qui est déterminé en fonction d'une modification de données de situation de conduite décrivant une inclinaison de la voie et définit la position du motif laser (7) de telle sorte qu'une modification de l'intervalle du motif laser (7) par rapport au véhicule automobile (1) en conséquence de la modification de l'inclinaison est compensée au moins partiellement.

6. Procédé selon l'une quelconque des revendications précédentes,
**caractérisé en ce que**
le paramètre d'affichage et/ou l'au moins un autre paramètre d'affichage et/ou au moins un autre paramètre d'affichage est utilisé, qui est déterminé en fonction de données de situation de conduite décrivant une topographie du sol (8) et définit la position (21, 23) de telle sorte que le motif laser (7) est affiché sur une voie de circulation parcourue à ce moment par le véhicule automobile (1).

7. Procédé selon l'une quelconque des revendications précédentes,
**caractérisé en ce que**
dans le cas d'un embouteillage, déterminé en particulier à partir des données de situation de conduite, le motif laser (7) est généré sous la forme d'un avertissement.

8. Procédé selon l'une quelconque des revendications précédentes,
**caractérisé en ce qu'**
un angle de rayonnement vertical (10) de la répartition de lumière (6) en tant qu'autre paramètre de rayonnement est modifié.

9. Feu arrière laser (2) pour un véhicule automobile (1) pour faire rayonner une répartition de lumière (6) générant un motif laser (7) sur un sol parcouru par un véhicule automobile, comprenant une source de laser (3) émettant une lumière laser, une unité d'optique (4) en aval de celle-ci et un dispositif de commande pour la réalisation d'un procédé selon l'une quelconque des revendications précédentes, dans lequel le paramètre d'affichage peut être déterminé sur la base de données de dynamique de conduite d'un dispositif de dynamique de conduite (13) du véhicule automobile (1) et/ou de données d'environnement d'un dispositif de capteur d'environnement (14) du véhicule automobile (1) qui décrivent le tracé de voie de circulation dans lequel, en tant que paramètre de rayonnement, un angle de rayonnement horizontal de la répartition de lumière (6) peut être modifié de telle sorte que la position latérale du motif laser (7) concernant l'axe longitudinal du véhicule automobile puisse être ajustée, dans lequel pour la modification de l'au moins un paramètre de rayonnement de la répartition de lumière (6) qui peut être modifié en fonction du paramètre d'affichage, au moins un dispositif de déflecteur (5) monté dans le trajet de rayonnement de la lumière laser et/ou agissant par rotation, basculement et/ou mouvement linéaire sur l'unité optique (4), en particulier au moins un élément micro-opto-électromécanique et/ou au moins un modulateur acousto-optique est prévu, dans lequel le dispositif de commande est conçu de telle sorte qu'en fonction de données de situation de conduite décrivant un virage (II, III) du véhicule automobile (1), au moins un paramètre d'affichage définissant une position (18, 21, 23, 25, 27) du motif laser (7) à générer est déterminé, le motif laser (7) est affiché sur la voie de circulation parcourue à ce moment par le véhicule automobile (1), dans lequel le paramètre d'affichage définit en outre une direction du motif laser (7) de telle sorte que le motif laser (7) qui est généré sous la forme d'une barre dans une situation de conduite standard est affiché perpendiculairement pendant le virage par rapport à un tracé de voie de circulation (22) sur la voie de circulation parcourue à ce moment par le véhicule automobile.

10. Véhicule automobile (1), comprenant au moins un feu arrière laser (2) monté à l'arrière selon la revendication 9.
